# EUROPÄISCHE PATENTSCHRIFT

(11) **EP 1 642 809 B1**
(45) Veröffentlichungstag und Bekanntmachung des Hinweises auf die Patenterteilung: **26.08.2009**
(21) Anmeldenummer: 05019773.0
(22) Anmeldetag: 12.09.2005
(51) Int. Cl.: B62D 25/14, B60H 1/00

(54) **Strömungssteuereinrichtung zur Steuerung der Durchflussmenge eines fluiden Mediums durch einen Strömungskanal**
Flow controlling device for controlling the amount of a fluid flowing through a duct
Régulateur de flux servant à réguler le débit de fluide à travers un conduit

(30) Priorität: 30.09.2004 DE 102004048206
(43) Veröffentlichungstag der Anmeldung: 05.04.2006
(73) Patentinhaber: Behr GmbH & Co. KG, 70469 Stuttgart (DE)
(72) Erfinder: Grieb, Andreas, Dipl.-Ing., 70499 Stuttgart (DE); Voigt, Klaus, Dipl.-Ing. (FH), 74321 Bietigheim-Bissingen (DE); Wolf, Walter, Dipl.-Ing., 71570 Oppenweiler-Zell (DE)

(56) Entgegenhaltungen:
- EP-A1- 1 577 131
- EP-A2- 0 100 629
- DE-A1- 2 307 439
- DE-A1- 19 831 670
- DE-U1- 29 916 755
- US-A- 4 794 944

## Beschreibung

Die Erfindung bezieht sich auf eine Strömungssteuereinrichtung zur Steuerung der Durchflussmenge eines fluiden Mediums durch einen Strömungskanal mit mindestens einem Auslenkelement, wobei jedes Auslenkelement zwischen einer ersten, den Strömungskanal vollständig schließenden Stellung und einer zweiten, den Strömungskanal vollständig öffnenden Stellung verstellbar angeordnet ist.

Derartige Strömungssteuereinrichtungen werden beispielsweise in der Fahrzeugtechnik, insbesondere zur Steuerung eines in einer Klimaanlage eines Fahrzeugs geführten und zur Temperierung des Fahrzeuginnenraums vorgesehenen Luftstroms verwendet. Mit Hilfe der Strömungssteuereinrichtung kann der Luftstrom bzw. die Durchflussmenge des Luftstromes durch Strömungskanäle oder Leitungen vollständig verschlossen oder geöffnet oder in eine beliebige Zwischenstellung gebracht werden. Beispielsweise kann die Durchflussmenge auf Null gestellt werden oder der Strömungskanal wird maximal für den Luftstrom geöffnet, d. h., die Durchflussmenge des Luftstromes durch die Strömungskanal wird auf ein Maximum eingestellt.

Zur Steuerung des Luftstroms sind in den Strömungskanälen so genannte Auslenkelemente angeordnet, die im einfachsten Fall eine Klappe und zwei Lagersitze zur Lagerung der Klappe im Strömungskanal aufweisen, wobei die Auslenkelemente zwischen einer ersten, den Strömungskanal vollständig schließenden Stellung und einer zweiten, den Strömungskanal vollständig öffnenden Stellung um die Lagersitze verstellbar angeordnet sind.

Einige Strömungssteuereinrichtungen umfassen ein oder mehrere verbesserte Auslenkelemente mit zwei Klappen, die in der Art von Flügeln gemeinsam verstellbar sind, wie aus der DE 2307439 bekannt ist. Diese Auslenkelemente werden auch als Schmetterlingsflügel-Auslenkelemente bezeichnet. Aufgrund der Ausgestaltung des Verstellelements sind sie jedoch nur gemeinsam um die an den Enden der Zentralachse angeordneten gemeinsamen Lagersitze schwenkbar.

Demgegenüber ist aus der nicht vorveröffentlichten deutschen Patentanmeldung mit dem Aktenzeichen DE 102004013686.6 eine Strömungssteuereinrichtung zur Steuerung der Durchflussmenge eines fluiden Mediums durch einen Strömungskanal bekannt, bei der das Auslenkelement mindestens zwei um eine Zentralachse angeordnete Klappen aufweist, wobei die Klappen separat voneinander gleichsinnig und/oder gegensinnig verstellbar angeordnet sind. Diese Auslenkelemente werden nachfolgend als V-Klappen bezeichnet.

Ferner ist aus der EP 0 100 629 A2 eine Strömungssteuereinrichtung nach dem Oberbegriff des Anspruchs 1 bekannt.

Die Auslenkelemente zur Steuerung des Luftstroms sind üblicherweise an leicht zugänglichen Stellen im Klimagerät oder den Düsen, beispielsweise in der Nähe der Ausströmöffnung angeordnet, um ihre Montage und Demontage zu erleichtern. Für neuartige Klimageräte- oder Düsenkonzepte ist eine Verlagerung der Auslenkelemente in die Strömungskanäle notwendig.

Im Allgemeinen sind die Strömungskanäle als geschlossene Profile ausgeführt, die entweder schon als solche hergestellt werden (beispielsweise durch Innenhochdruck-Umformung, IHU, bei Metall oder Blasformen bei Kunststoff) oder durch das Verbinden zweier Halbschalen zu einem geschlossenen Profil zusammengefügt werden. Bei schon geschlossen, d.h. einstückig hergestellten Strömungskanälen ist der Einbau eines Auslenkelements praktisch unmöglich. Bei aus Halbschalen gefügten Strömungskanälen kann das Auslenkelement vor dem Fügen und Verbinden der Halbschalen in diese eingelegt werden, ist aber nach dem Verbinden, sofern die Verbindung zwischen den Halbschalen unlösbar ist, zur Demontage im Rahmen von Service- oder Reparaturarbeiten nicht mehr zugänglich. Außerdem ist diese Art der Montage relativ aufwendig.

Daraus ergibt sich das Problem, dass die Auslenkelemente in Strömungskanäle, die als geschlossene Profile aus Metall, Kunststoff, Verbundwerkstoffen oder ähnlichem ausgeführt sind, nicht oder nur unter erheblichem technologischem Aufwand eingebaut, anschließend jedoch nicht ohne weiteres wieder ausgebaut werden können.

Der Erfindung liegt daher die Aufgabe zugrunde, eine Strömungssteuereinrichtung anzugeben, welche besonders einfach ausgeführt ist und bei der die Auslenkelemente zur Steuerung des Luftstroms innerhalb der Strömungskanäle demontierbar angeordnet sind.

Die Aufgabe wird erfindungsgemäß bei einer Strömungssteuereinrichtung der eingangs genannten Art mit den Merkmalen des unabhängigen Anspruchs 1 gelöst. Vorteilhafte Ausgestaltungen der Erfindung sind Gegenstand von Unteransprüchen.

Die erfindungsgemäße Strömungssteuereinrichtung zur Steuerung der Durchflussmenge eines fluiden Mediums durch einen Strömungskanal umfasst mindestens einen als Hohlprofil ausgebildeten Strömungskanal und mindestens ein in einem Strömungskanal angeordnetes Auslenkelement, wobei das Auslenkelement zwischen einer ersten, einen Strömungskanal schließenden Stellung und einer zweiten, einen Strömungskanal öffnenden Stellung verstellbar angeordnet ist und die Wandung des Strömungskanals eine Montageöffnung zur Montage oder Demontage des Auslenkelements aufweist. Die Montageöffnung bildet dabei selbst ein erstes Lager zur Lagerung des Auslenkelements. Darüber hinaus ist ein dem ersten Lager gegenüberliegendes zweites Lager als Gegenlager zur Lagerung des Auslenkelements vorgesehen.

Durch die Montageöffnung kann das Auslenkelement besonders einfach in das Innere des Strömungskanals eingeführt und bei Bedarf wieder aus dem Strömungskanal entfernt werden. Insbesondere ist das Einbringen von Auslenkelementen in einen geschlossenen Querschnitt ermöglicht, auch wenn diese weit von den Auslassöffnungen des Strömungskanals entfernt angeordnet werden müssen, die Auslassöffnungen durch Luftleitelemente versperrt sind oder durch den gekröpften Verlauf des Strömungskanals nur schwer zugänglich sind. Das Auslenkelement ist im montierten Zustand im ersten und zweiten Lager gelagert, wodurch eine leichte und genaue Verstellbarkeit des Auslenkelements erreicht wird. Beispielsweise ist das Auslenkelement mindestens in eine erste, einen Strömungskanal schließende Stellung und eine zweite, einen Strömungskanal öffnende Stellung verstellbar. Zudem wird, für den Fall dass der Strömungskanal Teil einer tragenden Struktur, beziehungsweise in eine tragende Struktur integriert ist, wie zum Beispiel in einen Querträger eines Kraftfahrzeugs, bedingt durch eine möglichst schmale und kleine Öffnung diese tragende Struktur nur begrenzt geschwächt. Auch sind die Auslenkelemente im Servicefall leicht demontierbar.

Das Hohlprofil des Strömungskanals ist aus zwei offenen Profilen gefügt, wobei die Montageöffnung mit dem ersten Lager im ersten offenen Profil und das zweite Lager als Gegenlager im zweiten offenen Profil angeordnet sind.

In einer vorteilhaften Ausgestaltung der Erfindung ist die Montageöffnung im Wesentlichen schlitzförmig ausgeführt. Da das Auslenkelement im Allgemeinen ein flächiges Gebilde ist, werden hierdurch der Querschnitt des Strömungskanals und dessen Festigkeit sowie Struktur am wenigsten geschwächt und Verlustströme so gering wie möglich gehalten.

In einer vorteilhaften Weiterbildung ist das erste Lager eine im Wesentlichen kreisförmige Erweiterung der schlitzförmigen Montageöffnung. Hierbei fungiert die Wandung des Strömungskanals selbst als Lager. Dazu ist es vorteilhaft, die schlitzförmige Montageöffnung kreisförmig zu erweitern, um eine ungehinderte Schwenkbewegung des Auslenkelements zu ermöglichen. Bei dieser Weiterbildung werden keine weiteren Bauteile zur Bildung des ersten Lagers benötigt.

In einer weiteren vorteilhaften Ausgestaltung der Erfindung ist das zweite Lager ein Führungsstift. Dieser Führungsstift ist an der Wandung des Strömungskanals angeordnet und ragt in diesen hinein, so dass die Drehachse des Auslenkelements sich mit einer dafür vorgesehenen Vertiefung, beispielsweise einem Sackloch, auf dem Führungsstift abstützen kann.

In einer alternativen Ausgestaltung der Erfindung ist das zweite Lager eine Bohrung oder ein Sackloch oder ein Durchzug in der Wandung des Strömungskanals. Diese Variante ist besonders kostengünstig herstellbar, da keine weiteren Bauteile zur Bildung des zweiten Lagers benötigt werden. Am Auslenkelement ist zur Lagerung desselben beispielsweise ein stiftförmiger Fortsatz vorgesehen, der in die Bohrung bzw. das Sackloch bzw. den Durchzug einführbar ist.

Zur Komforterhöhung werden immer häufiger mehrere Luftaustrittsöffnungen (Düsen) einer Klimaanlage durch nur einen Strömungskanal mit Luft versorgt. Hierzu ist der Strömungskanal vorteilhaft in mindestens zwei Teilkanäle unterteilt, wobei jedem Strömungskanal ein Auslenkelement zugeordnet ist. In dieser Ausgestaltung der Erfindung wird der Luftstrom in jedem der zwei oder mehr parallel verlaufenden Teilkanäle durch ein separat anzusteuerndes Auslenkelements reguliert.

Besonders vorteilhaft sind in diesem Fall die Auslenkelemente als sogenannte V-Klappen ausgeführt, wie sie aus der Anmeldung mit dem Aktenzeichen DE 102004013686.6 bekannt sind, bei der zwei zu einer Baugruppe zusammengefasste Auslenkelemente separat voneinander gleichsinnig und/oder gegensinnig verstellbar angeordnet sind.

Daher ist in einer vorteilhaften Ausgestaltung der Erfindung das aus zwei Elementen gebildete Auslenkelement als V-Klappe ausgeführt, wobei die Länge der Montageöffnung so groß gewählt ist, dass die V-Klappe im zusammengefalteten Zustand in den Strömungskanal einführbar ist. Hierdurch wird die tragende Struktur des Strömungskanals wesentlich geringer geschwächt, als wenn die V-Klappe die Montageöffnung im aufgefalteten Zustand passieren würde.

In einer weiteren vorteilhaften Ausgestaltung der Erfindung ist das Auslenkelement auf einer Montageplatte angeordnet, auf der auch mindestens ein geeignetes Antriebsmittel zur Verstellung des oder mehrerer Auslenkelemente vorgesehen ist. Beispielsweise werden zur Versorgung einer Komfortdüse, worunter man im Wesentlichen eine Düse mit Einstellmöglichkeiten der Ausströmung zwischen einem gerichteten Spotstrahl, einer rein diffusen Ausströmung, die vorzugsweise mittels einer Drallströmung erzeugt wird, und Mischformen dieser, zu verstehen hat, zwei Spotkanäle und ein Drallkanal und damit insgesamt drei Auslenkelemente benötigt. Das oder die Auslenkelemente sind auf einer Montageplatte montiert, auf der auch elemente sind auf einer Montageplatte montiert, auf der auch mindestens ein Elektromotor angeordnet ist.

Weiter vorteilhaft ist auf der Montageplatte auch mindestens ein geeignetes Kraftübertragungsmittel zur Übertragung der Kraft von einem Antriebsmittel zu dem oder mehreren Auslenkelementen vorgesehen. Das Kraftübertragungsmittel kann beispielsweise als Kurvenscheibe, Kurbel-, Zahnrad- oder Riemengetriebe ausgeführt sein. Die Montageplatte kann dabei die Aufgabe einer Drehmomentenabstützung für den Antrieb übernehmen.

Die so bestückte Montageplatte kann in einem einzigen Arbeitsgang von außen an den Strömungskanal montiert werden, so dass die drei Auslenkelemente durch die dafür vorgesehenen Montageöffnungen an ihre Positionen innerhalb des Strömungskanals gelangen. Die Auslenkelemente werden im Betrieb von dem (oder den) Elektromotor(en) angetrieben, wobei die von diesem erzeugte Kraft durch das oder die Kraftübertragungsmittel, beispielsweise ein Kurbelgetriebe, auf die Auslenkelemente übertragen werden. Vorteilhaft an dieser Lösung ist, dass die Strömungssteuereinrichtung modular aufgebaut ist, wodurch die Herstellungskosten und der Montageaufwand sinken. Bei entsprechender Gestaltung der Kraftübertragungsmittel reicht ein einziger Elektromotor zur Ansteuerung aller Auslenkelemente aus. Vorteilhafterweise kann die Montageplatte die Öffnung, insbesondere schlitzförmige Öffnung im Strömungskanal schließen, insbesondere beispielsweise mittels einer Dichtung abdichten.

Die mit der Erfindung erzielten Vorteile bestehen insbesondere auch darin, dass die Strömungssteuereinrichtung in einen Strömungskanal mit einem geschlossenen Querschnitt und somit in einem bereits zusammen gebauten Strömungskanal montiert bzw. demontiert werden kann. Hierdurch ist eine einfache Montage oder Demontage des Auslenkelements im Service- oder Reparaturfall möglich.

Nachfolgend werden Ausführungsbeispiele der Erfindung anhand einer Zeichnung näher erläutert. Darin zeigen:
- Figur 1A, 1B: schematisch im Querschnitt und in Draufsicht eine Strömungssteuereinrichtung für einen Strömungskanal mit einer Montageöffnung zur Montage oder Demontage eines Auslenkelements,
- Figur 2A, 2B: schematisch eine alternative Ausführungsform für eine Strömungssteuereinrichtung im Querschnitt und in Draufsicht, und
- Figur 3: schematisch eine Strömungssteuereinrichtung mit mehreren Auslenkelementen für mehrere Teilkanäle eines Strömungskanals.

Einander entsprechende Teile sind in allen Figuren mit den gleichen Bezugszeichen versehen.

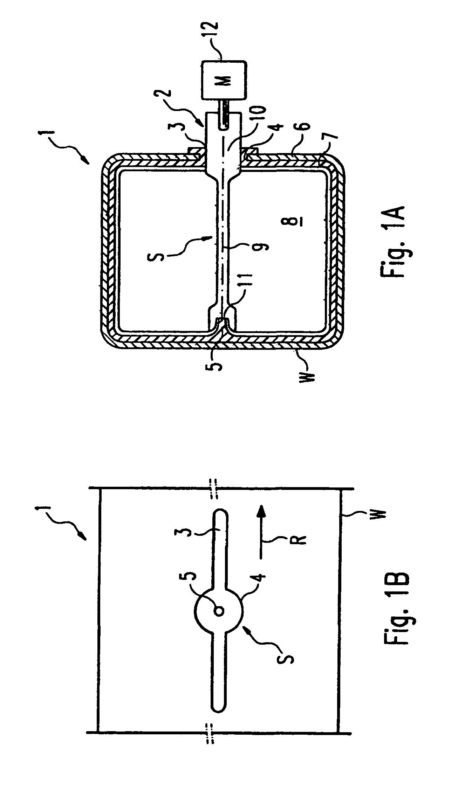

In **Figuren 1A** und **1B** ist eine vorteilhafte Ausgestaltung der Erfindung in zwei Ansichten dargestellt.

Die Strömungssteuereinrichtung S umfasst für einen als Hohlprofil, z. B. Rechteck-Hohlprofil ausgebildeten Strömungskanal 1 ein in dem Strömungskanal 1 angeordnetes Auslenkelement 2, das zwischen einer ersten, den Strömungskanal 1 schließenden Stellung und einer zweiten, den Strömungskanal 1 öffnenden Stellung verstellbar angeordnet ist.

Der Strömungskanal 1 ist beispielsweise doppelwandig ausgeführt. Er besteht aus einer Wand W mit einer äußeren Wandung 6 aus Blech und einer inneren Wandung 7 aus Kunststoff.

Die Wand W des Strömungskanals 1 weist eine Montageöffnung 3 zur Montage und/oder Demontage des Auslenkelements 2 auf. Die Montageöffnung 3 ist im Wesentlichen schlitzförmig ausgestaltet und durchdringt in der Tiefe die äußere Wandung 6 und die innere Wandung 7. Die Abmessung, insbesondere die Länge der Montageöffnung 3 ist so gewählt, dass das Auslenkelement 2 in sie einführbar ist, wie dies in Figur 1 B dargestellt ist. Die Montageöffnung 3 verläuft beispielsweise waagerecht entlang der Längsachse des Strömungskanals 1 und somit entlang zur Strömungsrichtung R des im Strömungskanal 1 strömenden Mediums.

Im mittleren Bereich der Montageöffnung 3 ist ein erstes Lager 4 zur Lagerung des Auslenkelements 2 vorgesehen, das als kreisförmige Erweiterung der Montageöffnung 3 ausgeführt ist. In der der Montageöffnung 3 und dem ersten Lager 4 gegenüberliegenden Wand W des Strömungskanals 1 ist an der inneren Wandung 7 als Gegenlager ein zweites Lager 5 zur Lagerung des Auslenkelements 2 vorgesehen. Das zweite Lager 5 ist beispielsweise einstückig als stiftförmiger Fortsatz der inneren Wandung 7 ausgeführt.

Das Auslenkelement 2 umfasst mindestens eine Klappe 8 mit einer zentral angeordneten Achse 9, die an ihren beiden Enden einen ersten Lagersitz 10 und einen zweiten Lagersitz 11 aufweist. Der erste Lagersitz 10 ist als Verdickung der Achse 9 ausgeführt, deren Durchmesser so gewählt ist, dass sie in das erste Lager 4 der Strömungssteuereinrichtung S einführbar ist. Der zweite Lagersitz 11 ist als Sackloch ausgeführt, dessen Durchmesser so gewählt ist, dass er auf das zweite Lager 5 aufsteckbar ist.

An den aus dem Strömungskanal 1 ragenden, an den ersten Lagersitz 10 anschließenden Teil der Achse 9 ist ein Elektromotor 12 zum Verstellen des Auslenkelements 2 angeschlossen.

Das Auslenkelement 2 wird durch die Montageöffnung 3 so in den Strömungskanal 1 eingeführt, dass der erste Lagersitz 10 auf dem ersten Lager 4 und der zweite Lagersitz 11 im zweiten Lager 5 zu liegen kommt. Damit ist die Montage der Strömungssteuereinrichtung S abgeschlossen. Sie kann zu Servicezwecken jederzeit leicht demontiert werden.

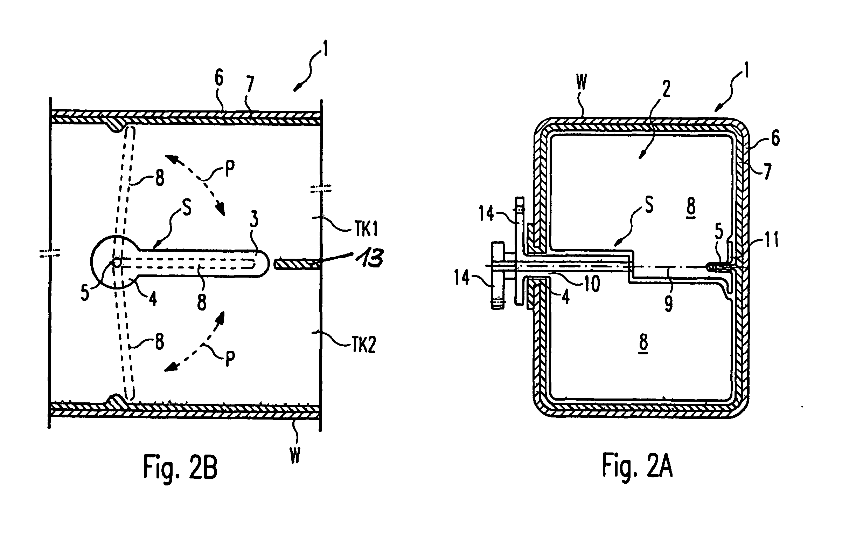

In den **Figuren 2A** und **2B** ist eine alternative Ausgestaltung einer Strömungssteuereinrichtung S in zwei Ansichten - im Querschnitt bzw. in Draufsicht auf den Strömungskanal 1 - dargestellt.

Die Strömungssteuereinrichtung S umfasst einen als Hohlprofil, z. B. Rechteck-Hohlprofil ausgebildeten Strömungskanal 1, der zusätzlich durch eine Trennwand 13 in zwei Teilkanäle TK1 bis TK2 unterteilt ist. Auch kann die Strömungssteuereinrichtung S zum Einstellen des Mediumsstromes durch entsprechende Stellung des Auslenkelements 2 aus einem Strömungskanal 1 mit einem geschlossenen Strömungsquerschnitt gebildet sein. Das in dem Strömungskanal 1 angeordnete Auslenkelement 2 umfasst hierzu zwei um eine zentrale Achse 9 angeordnete, über je einen Verstellhebel 14 separat verstellbare Klappen 8. Die Klappen 8 sind jeweils zwischen einer ersten, den jeweiligen Teilkanal TK1 bzw. TK2 schließenden Stellung und einer zweiten, den jeweiligen Teilkanal TK1 bzw. TK2 öffnenden Stellung oder in einer beliebigen Zwischenstellung entlang der Pfeile P verstellbar angeordnet.

Der Strömungskanal 1 ist doppelwandig ausgeführt. Er besteht aus einer äußeren Wandung 6 aus Blech und einer inneren Wandung 7 aus Kunststoff. Die Trennwand 13 ist Bestandteil der inneren Wandung 7.

Die Wand W des Strömungskanals 1 weist eine Montageöffnung 3 zur Montage und/oder Demontage des Auslenkelements 2 auf, die im Wesentlichen schlitzförmig ausgestaltet ist und die die äußere Wandung 6 und die innere Wandung 7 durchdringt. Die Länge der Montageöffnung 3 ist so gewählt, dass das Auslenkelement 2 in sie einführbar ist, wenn die beiden Klappen 8 des Auslenkelements 2 zusammengefaltet sind. Hierdurch ist die Montageöffnung 3 möglichst klein gehalten, so dass die Festigkeit und Struktur des Strömungskanals 1 weitgehend erhalten bleibt. Dies ist besonders wichtig, wenn der Strömungskanal die Funktion einer tragenden Struktur oder Teil einer Tragstruktur ist.

An einem Ende der Montageöffnung 3 ist ein erstes Lager 4 zur Lagerung des Auslenkelements 2 vorgesehen, das als kreisförmige Erweiterung der Montageöffnung 3 ausgeführt ist. In der der Montageöffnung 3 und dem ersten Lager 4 gegenüberliegenden Wand W des Strömungskanals 1 ist an der inneren Wandung 7 des Strömungskanals 1 ein zweites Lager 5 als Gegenlager zur Lagerung des Auslenkelements 2 vorgesehen. Das zweite Lager 5 ist einstückig als stiftförmiger Fortsatz der inneren Wandung 7 ausgeführt.

Das Auslenkelement 2 umfasst zwei Klappen 8 mit einer zentral angeordneten Achse 9, die an ihren beiden Enden einen ersten Lagersitz 10 und einen zweiten Lagersitz 11 aufweist. Der erste Lagersitz 10 ist als Verdickung der Achse 9 ausgeführt, deren Durchmesser so gewählt ist, dass sie in das erste Lager 4 einführbar ist. Der zweite Lagersitz 11 ist als Sackloch ausgeführt, dessen Durchmesser so gewählt ist, dass er auf das zweite Lager 5 aufsteckbar ist.

Das Auslenkelement 2 wird im zusammengefalteten Zustand durch die Montageöffnung 3 so in den Strömungskanal 1 eingeführt, dass der erste Lagersitz 10 auf dem ersten Lager 4 und der zweite Lagersitz 11 im zweiten Lager 5 zu liegen kommt. Anschließend wird das Auslenkelement 2 entfaltet. Nun können die Verstellhebel 14, die zu den beiden Klappen 8 gehören, an eine geeignete Antriebseinrichtung angeschlossen werden. Damit ist die Montage der Strömungssteuereinrichtung S abgeschlossen. Sie kann zu Servicezwecken jederzeit leicht montiert und demontiert werden.

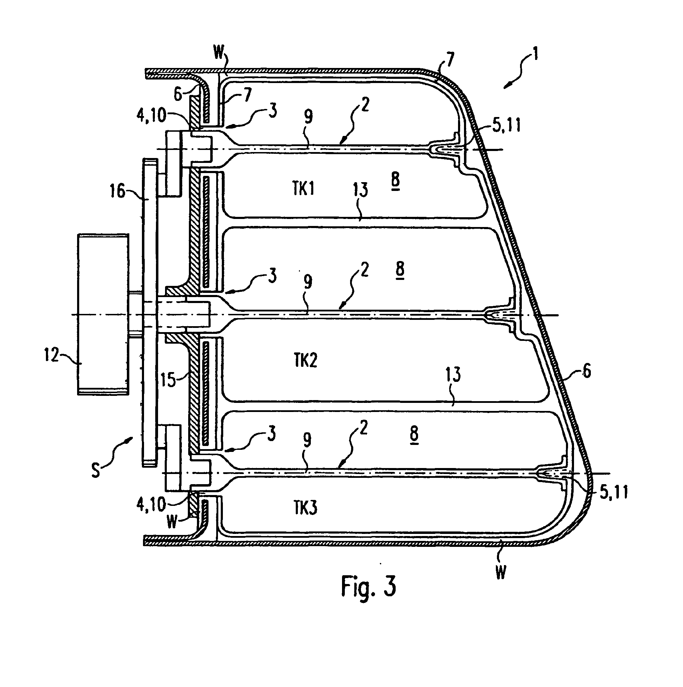

In **Figur 3** ist eine weitere vorteilhafte Ausgestaltung der Erfindung dargestellt.

Die Strömungssteuereinrichtung S umfasst einen als Hohlprofil ausgebildeten Strömungskanal 1, der durch zwei Trennwände 13 in drei Teilkanäle TK1 bis TK3 unterteilt ist. In jedem der Teilkanäle TK1 bis TK13 ist ein Auslenkelement 2 angeordnet, das eine verstellbare Klappe 8 mit einer zentralen Achse 9 aufweist und das jeweils zwischen einer ersten, den jeweiligen Teilkanal TK1 bis TK3 schließenden Stellung und einer zweiten, den jeweiligen Teilkanal TK1 bis TK3 öffnenden Stellung verstellbar angeordnet ist.

Der Strömungskanal 1 ist doppelwandig ausgeführt. Er besteht aus einer äußeren Wandung 6 aus Blech und einer inneren Wandung 7 aus Kunststoff. Die Trennwände 13 sind Bestandteil der inneren Wandung 7. Für geringe statische Anforderungen, kann die äußere Wandung 6 gemäß einem nicht dargestellten Ausführungsbeispiel auch entfallen, so dass der Strömungskanal lediglich als einschaliger Kunststoffkanal ausgeführt ist.

Die Wand W des Strömungskanals 1 weist drei Montageöffnungen 3 zur Montage und Demontage der Auslenkelemente 2 auf, die im Wesentlichen schlitzförmig ausgestaltet sind und die die äußere Wandung 6 und die innere Wandung 7 durchdringen. Die Abmessung, insbesondere Länge der Montageöffnungen 3 ist jeweils so gewählt, dass das zugehörige Auslenkelement 2 in sie einführbar ist. Insbesondere ist die Abmessung derart gewählt, dass das jeweilige Auslenkelement 2 über die Montageöffnung 3 in den Strömungskanal 1 einführbar und dort positionierbar ist.

In der Mitte jeder Montageöffnung 3 ist ein erstes Lager 4 zur Lagerung des Auslenkelements 2 vorgesehen, das als kreisförmige Erweiterung der Montageöffnung 3 ausgeführt ist. In der der Montageöffnung 3 und dem ersten Lager 4 gegenüberliegenden Wand W des Strömungskanals 1 ist an der inneren Wandung 7 des Strömungskanals 1 ein zweites Lager 5 als Gegenlager zur Lagerung des Auslenkelements 2 vorgesehen. Das zweite Lager 5 ist vorzugsweise einstückig beispielsweise als stiftförmiger Fortsatz der inneren Wandung 7 ausgeführt.

Jedes Auslenkelement 2 umfasst mindestens eine Klappe 8 mit einer zentral angeordneten Achse 9, die an ihren beiden Enden einen ersten Lagersitz 10 und einen zweiten Lagersitz 11 aufweist. Der erste Lagersitz 10 ist als Verdickung der Achse 9 ausgeführt, deren Durchmesser so gewählt ist, dass sie in das erste Lager 4 einführbar ist. Der zweite Lagersitz 11 ist als Sackloch ausgeführt, dessen Durchmesser so gewählt ist, dass er auf das zweite Lager 5 aufsteckbar ist.

Die drei Auslenkelemente 2 sind auf einer gemeinsamen Montageplatte 15 angeordnet. Dort sind sie mit einem Kraftübertragungsmittel 16 verbunden, das mit einem ebenfalls auf der Montageplatte 15 angeordneten Elektromotor 12 in Wirkverbindung steht.

Die Auslenkelemente 2 werden durch die jeweilige Montageöffnung 3 so in den Strömungskanal 1 eingeführt, dass der erste Lagersitz 10 auf dem ersten Lager 4 und der zweite Lagersitz 11 im zweiten Lager 5 zu liegen kommt.
Anschließend wird die Montageplatte 15 am Strömungskanal 1 befestigt. Damit ist die Montage der Strömungssteuereinrichtung S abgeschlossen. Sie kann zu Wartung-, Service- oder Reparaturzwecken jederzeit leicht demontiert werden.

## Patentansprüche

1. Strömungssteuereinrichtung (S) zur Steuerung der Durchflussmenge eines fluiden Mediums durch einen Strömungskanal (1), umfassend mindestens einen als Hohlprofil ausgebildeten Strömungskanal (1) und mindestens ein in einem Strömungskanal (1) angeordnetes Auslenkelement (2), wobei das Auslenkelement (2) zwischen einer ersten, einen Strömungskanal (1) schließenden Stellung und einer zweiten, einen Strömungskanal (1) öffnenden Stellung verstellbar angeordnet ist und die Wandung des Strömungskanals (1) mindestens eine Montageöffnung (3) zur Montage oder Demontage des Auslenkelements (2) aufweist, **dadurch gekennzeichnet, dass** das Hohlprofil des Strömungskanals (1) aus zwei offenen Profilen gefügt ist, wobei die Montageöffnung (3), mit einem ersten Lager (4), das sie zur Lagerung des Auslenkelements (2) bildet, in dem ersten offenen Profil und ein dem ersten Lager (4) gegenüberliegendes zweites Lager (5) als Gegenlager zur Lagerung des Auslenkelements (2) in dem zweiten offenen Profil angeordnet sind.

2. Strömungssteuereinrichtung nach Anspruch 1, **dadurch gekennzeichnet, dass** die Montageöffnung (3) im Wesentlichen schlitzförmig ausgeführt ist.

3. Strömungssteuereinrichtung nach einem der Ansprüche 1 bis 2, **dadurch gekennzeichnet, dass** das erste Lager (4) eine im Wesentlichen kreisförmige Erweiterung der schlitzförmigen Montageöffnung (3) ist.

4. Strömungssteuereinrichtung nach einem der Ansprüche 1 bis 3, **dadurch gekennzeichnet, dass** das zweite Lager (5) ein an der Wandung des Strömungskanals (1) angeordneter Führungsstift ist.

5. Strömungssteuereinrichtung nach einem der Ansprüche 1 bis 4, **dadurch gekennzeichnet, dass** das zweite Lager (5) eine Bohrung oder ein Sackloch oder ein Durchzug in der Wandung des Strömungskanals (1) ist.

6. Strömungssteuereinrichtung nach einem der Ansprüche 1 bis 5, **dadurch gekennzeichnet, dass** der Strömungskanal (1) in mindestens zwei Teilkanäle (TK1 bis TK3) unterteilt ist, wobei jedem Teilkanal (TK1 bis TK3) ein Auslenkelement (2) zugeordnet ist.

7. Strömungssteuereinrichtung nach einem der Ansprüche 1 bis 6, **dadurch gekennzeichnet, dass** das Auslenkelement (2) als eine V-Klappe ausgeführt ist, wobei die Länge der Montageöffnung (3) so groß gewählt ist, dass die V-Klappe im zusammengefalteten Zustand in den Strömungskanal (1) einführbar ist.

8. Strömungssteuereinrichtung nach einem der Ansprüche 1 bis 7, **dadurch gekennzeichnet, dass** das Auslenkelement (2) auf einer Montageplatte (15) angeordnet ist, auf der mindestens ein geeignetes Antriebsmittel (12) zur Verstellung des oder mehrerer Auslenkelemente (2) vorgesehen ist.

9. Strömungssteuereinrichtung nach Anspruch 8, **dadurch gekennzeichnet, dass** auf der Montageplatte (15) mindestens ein geeignetes Kraftübertragungsmittel (16) zur übertragung der Kraft von einem Antriebsmittel (12) zu dem oder mehreren Auslenkelementen (2) vorgesehen ist.

## Claims

1. Flow controlling device (S) for controlling the flow amount of a fluid medium through a flow channel (1), comprising at least one flow channel (1) formed as a hollow profile, and at least one deflecting element (2) arranged in the flow channel (1), wherein the deflecting element (2) is arranged in an adjustable manner between a first position closing a flow channel (1) and a second position opening a flow channel (1), and the wall of the flow channel (1) has at least one mounting opening (3) for mounting or demounting the deflection element (2), **characterised in that** the hollow profile of the flow channel (1) is assembled from two open profiles, wherein the mounting opening (3) is arranged with a first bearing (4), which it forms for mounting the deflecting element (2), in the first open profile, and a second bearing (5) opposite the first bearing (4) as a counter bearing for mounting the deflecting element (2) in the second open profile.

2. Flow controlling device according to claim 1, **characterised in that** the the mounting opening is formed essentially in a slot-shaped manner.

3. Flow controlling device according to one claims 1 to 2, **characterised in that** the first bearing (4) is an essentially circular extension of the slot-shaped mounting opening (3).

4. Flow controlling device according to one of claims 1 to 3, **characterised in that** tie second bearing (5) is a guide pin arranged at the wall of the flow channel (1).

5. Flow controlling device according to one of claims 1 to 4, **characterised in that** the second bearing (5) is a bore or a blind hole or a rim hole in the wall of the flow channel (1).

6. Flow controlling device according to one of claims 1 to 5, **characterised in that** the flow channel (1) is divided into at least two partial channel (TK1 to TK3), wherein a deflecting element (2) is allocated to each partial channel (TK1 to TK 3).

7. Flow controlling device according to one of claims 1 to 6, **characterised in that** the deflecting element (2) is designed as a V-flap, wherein the length of the mounting g opening (3) is chosem to be such a size that the V-flap can be inserted into the flow channel (1) in its folded state.

8. Flow controlling device according to one of claims 1 to 7, **characterised in that** the deflecting element (2) is arranged on a mounting plate (15), on which is provided at least one suitable drive means (12) for adjusting the one or several deflecting elements (2).

9. Flow controlling device according to claim 8, **characterised in that** at least one suitable force transfer means (16) is arranged on the mounting plate (15) for transferring the force from a drive means (12) to the one or several deflecting elements (2).

## Revendications

1. Dispositif (S) de commande de l'écoulement servant à la régulation du débit d'un milieu fluide à travers un conduit d'écoulement (1), comprenant au moins un conduit d'écoulement (1) configuré comme un profilé creux et au moins un élément de déviation (2) disposé dans un conduit d'écoulement (1), où l'élément de déviation (2) est disposé, de façon réglable, entre une première position fermant un conduit d'écoulement (1), et une deuxième position ouvrant un conduit d'écoulement (1), et la paroi du conduit d'écoulement (1) présente au moins une ouverture de montage (3) servant au montage ou au démontage de l'élément de déviation (2),
**caractérisé en ce que** le profilé creux du conduit d'écoulement (1) est réalisé par assemblage de deux profilés ouverts, où l'ouverture de montage (3), comprenant un premier palier (4) qui forme l'ouverture de montage pour le logement de l'élément de déviation (2), est disposée dans le premier profilé ouvert, et un deuxième palier (5), en tant que palier support placé à l'opposé du premier palier (4) et servant au logement de l'élément de déviation (2), est disposé dans le deuxième profilé ouvert.

2. Dispositif de commande de l'écoulement selon la revendication 1, **caractérisé en ce que** l'ouverture de montage (3) est réalisée sensiblement en forme de fente.

3. Dispositif de commande de l'écoulement selon l'une ou l'autre des revendications précédentes, **caractérisé en ce que** le premier palier (4) est un élargissement, sensiblement de forme circulaire, de l'ouverture de montage (3) en forme de fente.

4. Dispositif de commande de l'écoulement selon l'une quelconque des revendications 1 à 3, **caractérisé en ce que** le deuxième palier (5) est une goupille de guidage disposée sur la paroi du conduit d'écoulement (1).

5. Dispositif de commande de l'écoulement selon l'une quelconque des revendications 1 à 4, **caractérisé en ce que** le deuxième palier (5) est un perçage ou un trou borgne ou un passage dans la paroi du conduit d'écoulement (1).

6. Dispositif de commande de l'écoulement selon l'une quelconque des revendications 1 à 5, **caractérisé en ce que** le conduit d'écoulement (1) est divisé en au moins deux conduits partiels (TK1 à TK3), où un élément de déviation (2) est associé à chaque conduit partiel (TK1 à TK3).

7. Dispositif de commande de l'écoulement selon l'une quelconque des revendications 1 à 6, **caractérisé en ce que** l'élément de déviation (2) est réalisé comme un volet en V, où la longueur de l'ouverture de montage (3) est choisie de manière telle, que le volet en V, à l'état replié, puisse être introduit dans le conduit d'écoulement (1).

8. Dispositif de commande de l'écoulement selon l'une quelconque des revendications 1 à 7, **caractérisé en ce que** l'élément de déviation (2) est disposé sur une plaque de montage (15) sur laquelle il est prévu, au moins un moyen d'entraînement approprié (12) servant au réglage de l'élément ou de plusieurs éléments de déviation (2).

9. Dispositif de commande de l'écoulement selon la revendication 8, **caractérisé en ce qu'**il est prévu, sur la plaque de montage (15), au moins un moyen de transmission de force approprié (16) servant à la transmission de la force d'un moyen d'entraînement (12), à l'élément ou à plusieurs éléments de déviation (2).
